(19) Europäisches Patentamt

European Patent Office

Office européen des brevets

(11) **EP 1 238 837 B1**

(12) **EUROPÄISCHE PATENTSCHRIFT**

(45) Veröffentlichungstag und Bekanntmachung des Hinweises auf die Patenterteilung:
**22.02.2006 Patentblatt 2006/08**

(51) Int Cl.:
***B60H 1/32*** *(2006.01)*

(21) Anmeldenummer: **01126362.1**

(22) Anmeldetag: **07.11.2001**

(54) **Verfahren zur Regelung eines Kompressors**

Method for regulating a compressor

Procédé permettant de régler un compresseur

(84) Benannte Vertragsstaaten:
**DE ES FR GB IT SE**

(30) Priorität: **31.01.2001 DE 10104507**

(43) Veröffentlichungstag der Anmeldung:
**11.09.2002 Patentblatt 2002/37**

(73) Patentinhaber: **Behr GmbH & Co. KG**
**70469 Stuttgart (DE)**

(72) Erfinder:
- **Barusche, Wilhelm, Dipl.-Ing.**
**73117 Wangen (DE)**
- **Gerken, Thomas**
**70599 Stuttgart (DE)**

- **Krauss, Hans-Joachim, Dipl.-Ing. (FH)**
**70567 Stuttgart (DE)**
- **Kunberger, Ottokar, Dipl.-Ing. (FH)**
**70825 Korntal-Münchingen (DE)**
- **Lindauer, Sascha, Dipl.-Ing. (FH)**
**73553 Altdorf (DE)**
- **Lochmahr, Karl, Dipl.-Ing. (FH)**
**71665 Vaihingen (DE)**
- **Sickelmann, Michael**
**70435 Stuttgart (DE)**

(56) Entgegenhaltungen:
**US-A- 5 385 029          US-A- 5 893 272**
**US-A1- 2001 017 036**

EP 1 238 837 B1

**Beschreibung**

Die Erfindung betrifft ein Verfahren zur Regelung eines Kompressors eines Kältemittelkreislaufs einer Klimaanlage eines Kraftfahrzeuges gemäß dem Oberbegriff des Anspruchs 1. So ein Verfahren ist in EP 1 066 997 offenbart.

Der Erfindung liegt das allgemeine Problem zugrunde, daß in bestimmten Fahrzuständen, in denen der Antriebsmotor eine hohe Leistung erbringen muß, beispielsweise bei Fahrten in großer Höhe oder bei starken Beschleunigungen, die Leistungabgabe an den Kompressor des Kältekreislaufs einer Klimaanlage begrenzt sein soll. Bei heutigen Klimaanlagen wird die fahrsituationsbedingte Begrenzung des Drehmoments realisiert, indem das Motorsteuergerät oder das Getriebesteuergerät eine komplette Abschaltung des Kompressors veranlaßt. Das momentane Lastdrehmoment wird rechnerisch mit Hilfe einer durch Simulation und Versuch erhaltenen Funktion bestimmt, wobei die Funktion von Größen, wie Kältemittelhochdruck, Kompressordrehzahl, Ansteuergrad des Setpoints, Spannung des Gebläsemotors eines Klimageräts u. dgl., abhängen kann.

Nachteilig an dieser bekannten Regelung zur Limitierung des Lastdrehmoments des Kompressors ist, daß eine komplette Abschaltung erfolgt, so daß die Klimaanlage in den beschriebenen Fahrsituationen nicht arbeiten kann, was zu Komforteinbußen führt.

Ausgehend von diesem Stand der Technik ist es Aufgabe der Erfindung ein verbessertes Verfahren zur Regelung eines Kompressors bereitzustellen, mit dem die vorgenannten Nachteile vermieden werden können.

Diese Aufgabe wird gelöst durch ein Verfahren mit den Merkmalen des Anspruchs 1.

Wenn erfindungsgemäß das momentane Lastdrehmoment des Kompressors als Funktion von Variablen dargestellt wird und unter Zuhilfenahme dieser Funktion anhand der zugehörigen Umkehrfunktion in Abhängigkeit des vorgegebenen maximalen Grenzdrehmoments ein Ansteuerungssignal für den Kompressor ermittelt wird, kann der Kompressor auch dann betrieben werden, wenn das Lastdrehmoment beispielsweise durch die Motorsteurung auf einen maximalen Wert begrenzt wird, also in den oben beschriebenen Fahrsituationen, in denen eine hohe Motorleistung notwendig ist. Dabei wird die Klimaanlage mit verminderter Leistung betrieben, und zwar derart, daß das Lastdrehmoment dem vom Motorsteuergerät vorgegebenen Grenzdrehmoment entspricht, so daß selbst in den genannten Fahrsituationen mit hoher Motorleistung, die Klimaanlage zwar mit reduzierter Leistung, jedoch mit der durch das jeweilige Grenzdrehmoment zulässigen, maximalen Leistung betrieben werden kann.

Durch das erfindungsgemäße Verfahren werden bei der Klimatisierung durch die Reduzierung der Kompressorleistung auf ein zulässiges Maß, welches von der Motorsteuerung vorgegeben wird, Komfortverbesserungen erreicht und eine Komplettabschaltung kann in vielen Fällen vermieden werden.

Ebenso werden Komfortverbesserungen durch Vermeidung bzw. Reduzierung von Kompressor-Einschaltvorgängen erzielt. Die Funktionsweise des Motors, wie Rundlauf- oder Leerlaufeigenschaften, werden verbessert. Eine exakte Koordination zwischen abgegriffenem Lastdrehmoment und der Motorsteuerung ermöglicht außerdem Kraftstoffersparnisse.

Vorteilhafterweise wird das momentane Lastdrehmoment, das mit dem Grenzdrehmoment verglichen wird, aus der genannten Funktion errechnet, wobei die Funktion in vorteilhafter Weise als Kennfeld in einem Klimaanlagen-Steuergerät gespeichert ist. Dann kann auch in einfacher Weise die Umkehrfunktion unmittelbar aus den gespeicherten Daten entnommen werden.

In einer Ausgestaltung der Erfindung wird das momentane Lastdrehmoment wenigstens in Abhängigkeit eines kompressorausgangsseitigen Hochdrucks und der Kompressordrehzahl ermittelt, wie dies in heutigen Klimaanlagen bereits realisiert wird.

Vorteilhafterweise kann dann das Steuersignal aus dem kompressorausgangsseitigen Hochdruck erzeugt werden, der aus der Umkehrfunktion bei vorgegebenem Grenzdrehmoment ermittelt wird.

In einer Klimaanlage, die mit einem anderen Kältemittel, beispielsweise $CO_2$, arbeitet, ist es vorteilhaft, wenn das Lastdrehmoment wenigstens in Abhängigkeit eins kompressoreingangsseitigen Saugdrucks und der Kompressordrehzahl ermittelt wird, wobei dann für den Fall hoher Motorleistung und Begrenzung des Lastdrehmoments das Steuersignal aus dem kompressorausgangsseitigen Saugdruck erzeugt wird, der aus der Umkehrfunktion ermittel wird.

In Weiterbildung der Erfindung kann eine komplette Abschaltung des Kompressors in gewissen Grenzsitutionen erfolgen, beispielsweise in Abhängigkeit weiterer Parameter wie der Verdampfertemperatur, so daß beispielsweise bei zu hoher Verdampfertemperatur ein Betrieb der Klimaanlage nicht mehr sinnvoll ist und der Kompressor abgeschaltet werden sollte.

Die Erfindung wird im Folgenden anhand von Ausführungsbeispielen unter Bezugnahme auf die Zeichnung erläutert. In der Zeichnung zeigen:

Fig. 1    ein schematisches Blockschaltbild für die Regelung eines Kältemittelkreislaufs;
Fig. 2    ein Kennfeld zur Ermittlung des Lastdrehmoments.

Ein Kältekreislauf 10 einer Klimaanlage eines Kraftfahrzeuges weist einen Verdampfer 12, einen Kompressor 14, einen Kondensator 16 und ein Expansionsventil 18 auf, die über entsprechende Kältemittelleitungen 20 miteinander verbunden sind.

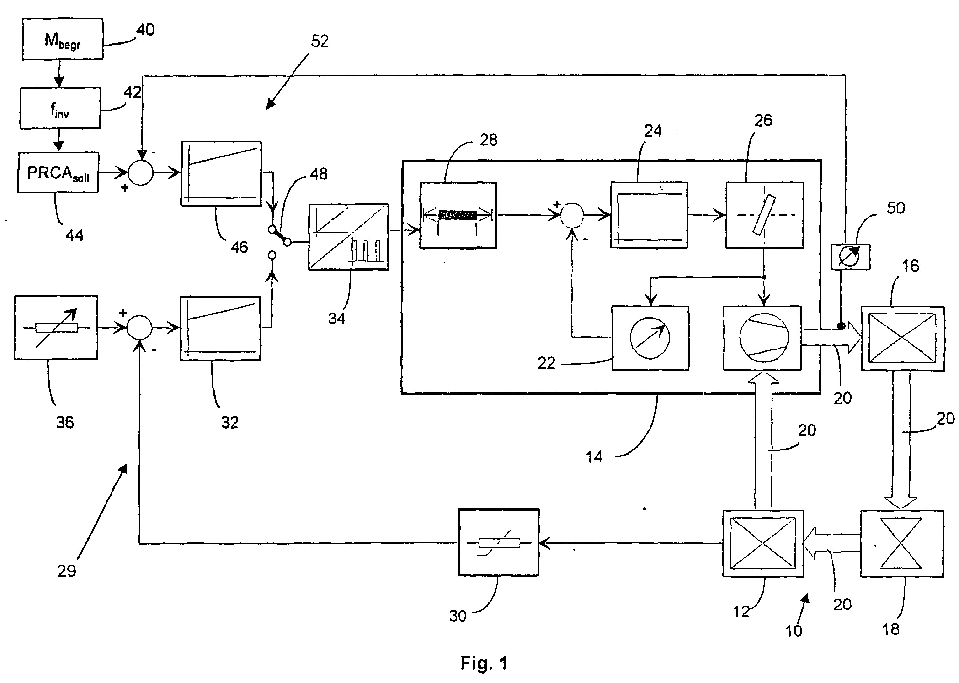

In Fig. 1 ist anhand des Blockschaltbildes die Regelung des Kältekreislaufs 10 mit seinem Kompressor 14 dargestellt. Die einzelnen, weiter unten erläuterten Komponenten der Regelung sind im wesentlichen Soft- und Hardware-Komponenten eines nicht näher dargestellten Steuergeräts der Klimaanlage. Der Kompressor 14 dieses Ausführungsbeispiels umfaßt eine interne Saugdruckregelung, wozu der Saugdruck-Istwert mit einer Saugdruckmessvorrichtung 22 ermittelt und als Regelgröße einem Saugdruckregler 24 zugeführt wird, über den das Hubvolumen 26 des Kompressors 14 verstellt wird. Durch ein Regelventil 28 wird ein Saugdruck-Sollwert dem Saugdruckregler 24 zugeführt, wobei das Regelventil 28 wie folgt angesteuert wird.

Im normalen Betrieb wird der Kältekreislauf 10 über eine Verdampfertemperaturregelung 29 geregelt, wobei die Verdampfertemperatur über eine Messvorrichtung 30 ermittelt wird und als Regelgröße einem Verdampfertemperaturregler 32 zugeführt wird, dessen Signal bei 34 in ein pulsweitenmodelliertes Signal umgesetzt und dem Regelventil 28 zugeführt wird. Der Verdampfertemperatur-Sollwert 36 ist eine Rechengröße einer übergeordneten Klimaregelung.

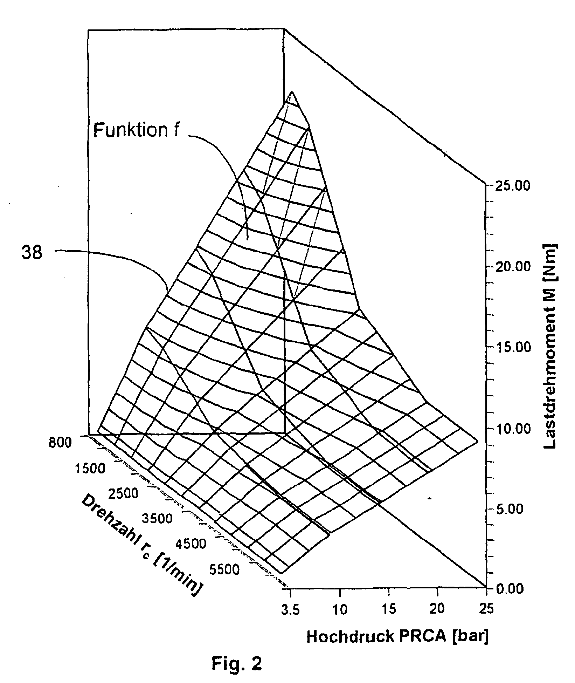

Im laufenden Betrieb der Klimaanlage wird permanent das Lastdrehmoment M des Kompressors 14 anhand einer vorteilhafterweise als Kennfeld 38 hinterlegten Funktion ermittelt. Funktionsvariablen sind bevorzugt eine Kompressordrehzahl $r_c$, die durch eine Motordrehzahl vorgegeben ist und ein Kältemittelhochdruck $PRCA_{ist}$ nach dem Kompressor 14, der sich entsprechend der Verdampfertemperaturregelung 29 einstellt und gemessen werden kann (Bezugsziffer 50). Ein derartiges Kennfeld 38 ist in Fig. 2 beispielhaft zur Veranschaulichung dargestellt. Das dargestellte Kennfeld 38 hat lediglich drei Dimensionen, da diese zeichnerisch noch darstellbar sind. Es ist aber auch denkbar, daß das Drehmoment M als Funktion von weiteren Variablen berechnet werden kann, wobei beispielsweise als Variable ein Pulsweitenmodulations-Setpoint PWM oder auch die Spannung eines Verdampfergebläses $U_G$ der Klimaanlage genommen werden können. Das Lastdrehmoment M wäre dann gegebenenfalls genauer bestimmbar. Somit ermittelt sich das Lastdrehmoment M als Funktion von $PRCA_{ist}$, $R_c$, PWM und $U_G$, so daß gilt

$$M = f \, (PRCA_{ist}, \, r_c, \, PWM, \, U_G)$$

Des weiteren wird, beispielsweise von einer Motorsteuerung, ein maximales Grenzdrehmoment $M_{Grenz}$ vorgegeben und das berechnete Lastdrehmoment M mit dem Grenzdrehmoment $M_{Grenz}$ verglichen. Ist das Lastdrehmoment M größer als das Grenzdrehmoment $M_{Grenz}$, dann wird die Verdampfertemperaturregelung 29 durch Umlegen eines Schalters 48 abgeschaltet und der Kältekreislauf 10 wie folgt geregelt.

Über das Grenzdrehmoment $M_{Grenz}$ (Bezugsziffer 40) wird anhand der zu der obengenannten Funktion f gehörende Umkehrfunktion $f_{inv}$, die in einem Berechnungsschritt 42 aus dem Kennfeld 38 numerisch ermittelbar ist, in einem weiteren Berechnungsschritt 44 ein Ansteuersignal, das aus einem Sollwert $PRCA_{soll}$ für den Kältemittelhochdruck nach Kompressor erzeugt wird, ermittelt, so daß der Kältemittelhochdruck-Sollwert $PRCA_{soll}$ sich wie folgt darstellt:

$$PRCA_{soll} = f_{inv} \, (M_{Grenz}, \, r_c, \, PWM, \, U_G)$$

Diese Ermittlung des Kältemittelhochdruck-Sollwerts $PRCA_{soll}$ kann numerisch anhand des bekannten und gespeicherten Kennfeldes 38 ermittelt werden.

Das dem Kältemittelhochdruck-Sollwert $PRCA_{soll}$ entsprechende Signal wird mit dem Istwert des Kältemittelhochdrucks $PRCA_{ist}$, der zwischen Kompressor 14 und Kondensator 16 über eine Meßvorrichtung 50 gemessen wird, einem Hochdruckregler 46 zugeführt und bei 34 in ein pulsweitenmodelliertes Signal umgewandelt, das dem Regelventil 28 des Kompressors 14 zugeführt wird.

Der Kältemittelkreislauf 10 wird somit unter Berücksichtigung des Grenzdrehmoments $M_{Grenz}$ hochdruckseitig geregelt.

Während des Betriebes der Klimaanlage geht also bei Überschreiten des Grenzwertes $M_{Grenz}$ die Verdampfertemperaturregelung 29 fließend in eine das Drehmoment begrenzende Hochdruck-Reglung 52 mit entsprechender Sollwert-Vorgabe für den Hochdruck über.

Die vorgenannte Regelung betrifft die Regelung im laufenden Betrieb. Bei Einschalten der Klimaanlage, also bei Einschalten des Kompressors 14, werden der Anstieg des Hochdrucks PRCA und der Abfall des (intern geregelten) Saugdrucks gleichermaßen, wie im normalen Betriebsfall für die Momentenberechnung, berücksichtigt und zum Motorsteuergerät weitergeleitet.

Sollten weitere Parameter, wie beispielsweise die Verdampfertemperatur unzulässige Werte erreichen - wenn beispielsweise die Verdampfertemperatur zu hoch steigt - ist in Weiterbildung der Erfindung die Regelung derart ausgelegt, daß in diesen Fällen doch der Kompressor komplett abgeschaltet wird.

Wenn anstelle des bekannten Kältemittels R134a anderes Kältemittel, beispielsweise $CO_2$ eingesetzt wird, kann das erfindungsgemäße Verfahren zur Regelung des Kompressors grundsätzlich ebenfalls verwendet werden, wobei aufgrund des stark unterschiedlichen Aufbaus eines $CO_2$ Kältekreislaufs und der zugehörigen Regelung das Lastdrehmoment M sich aus anderen Variablen errechnet. So kommen als Variablen der Funktion zur Berechnung des Lastdrehmoments beispielsweise der Luftmassenstrom in dem Klimagerät, die Lufteintrittstemperatur, die Temperatur der Luft nach dem Verdampfer, die in das Klimagerät eintretenden Feuchte, die Kompressordrehzahl und des Verhältnis aus Kältemittelhochdruck nach Kompressor zu Kältemittelsaugdruck vor Kompressor in Betracht.

Mit Hilfe der zugehörigen Umkehrfunktion wird bei diesem Kältekreislauf bei vorgegebenem Grenzdrehmoment $M_{Grenz}$ jetzt der Kältemittelsaugdruck vor Kompressor zur Regelgröße mit zugehöriger Sollwert-Vorgabe, so daß sich der Sollwert des Kältemittelsaugdrucks vor Kompressor als Funktion des Grenzdrehmoments, Luftmassenstrom, Lufteintrittstemperatur, Temperatur der Luft nach dem Verdampfer, der Feuchte, der Kompressordrehzahl und des Kältemittelhochdrucks nach Kompressor ergibt.

## Patentansprüche

1. Verfahren zur Regelung eines Kompressors (14) eines Kältmittelkreislaufs (10) einer Klimaanlage eines Kraftfahrzeuges, bei dem das momentane Lastdrehmoment (M) bestimmt wird und mit einem vorgegebenen, maximalen Grenzdrehmoment ($M_{Grenz}$) verglichen wird und in Abhängigkeit eines daraus resultierenden Vergleichswertes der Kompressor (14) angesteuert wird, **dadurch gekennzeichnet, daß** das momentane Lastdrehmoment (M) als Funktion (f) von Variablen (PRCA, $r_c$, PWM, $U_G$) dargestellt wird und anhand einer zu dieser Funktion (f) gehörenden Umkehrfunktion ($f_{inv}$) in Abhängigkeit des von der Motorsteuerung vorgegebenen maximalen Grenzdrehmoments ($M_{Grenz}$) ein Ansteuersignal ($PRCA_{soll}$) für den Kompressor (14) ermittelt wird.

2. Verfahren nach Anspruch 1, **dadurch gekennzeichnet, daß** das momentane Lastdrehmoment (M) aus der Funktion (f) errechnet wird.

3. Verfahren nach einem der vorhergehenden Ansprüche, **dadurch gekennzeichnet, daß** die Funktion (f) als Kennfeld (38) gespeichert ist.

4. Verfahren nach einem der vorhergehenden Ansprüche, **dadurch gekennzeichnet, daß** das momentane Lastdrehmoment (M) wenigstens in Abhängigkeit eines kompressorausgangsseitigen Hochducks ($PRCA_{ist}$) und der Kompressordrehzahl ($r_c$) ermittelt wird.

5. Verfahren nach einem der vorhergehenden Ansprüche, **dadurch gekennzeichnet, daß** das Ansteuersignal (48) aus dem kompressorausgangsseitige Hochduck ($PRCA_{soll}$) erzeugt wird, der aus der Umkehrfunktion ermittelt wird.

6. Verfahren nach einem der vorhergehenden Ansprüche 1 bis 3, **dadurch gekennzeichnet, daß** das momentane Lastdrehmoment wenigstens in Abhängigkeit eines kompressoreingangsseitigen Saugducks und der Kompressordrehzahl ermittelt wird.

7. Verfahren nach Anspruch 6, **dadurch gekennzeichnet, daß** das Ansteuersignal aus dem kompressoreingangsseitigen Saugduck erzeugt wird, der aus der Umkehrfunktion ermittelt wird. ,

8. Verfahren nach einem der vorhergehenden Ansprüche, **dadurch gekennzeichnet, daß** in Abhängigkeit weiterer Parameter, wie beispielsweise eine Verdampfertemperatur, ein Betrieb des Kompressors erfolgt.

## Claims

1. Method for the control of a compressor (14) of a refrigerant circuit (10) of an air conditioning system of a motor vehicle, wherein the current load torque (M) is determined and compared to a preset maximum limit torque ($M_{Grenz}$) and the compressor (14) is controlled in dependence on a resulting comparative value, **characterised in that** the current load torque (M) is represented as a function (f) of variables (PRCA, $r_c$, PWM, $U_G$), and **in that** a select signal ($PRCA_{soll}$) for the compressor (14) is determined in dependence on the maximum limit torque (Morenz) preset by the engine control using an inverse function ($f_{inv}$) associated with said function (f).

**2.** Method according to claim 1, **characterised in that** the current load torque (M) is calculated from the function (f).

**3.** Method according to any of the preceding claims, **characterised in that** the function (f) is stored as a characteristic map (38).

**4.** Method according to any of the preceding claims, **characterised in that** the current load torque (M) is determined at least in dependence on a compressor output-side high pressure ($PRCA_{ist}$) and on compressor speed ($r_c$).

**5.** Method according to any of the preceding claims, **characterised in that** the select signal (48) is generated from the compressor output-side high pressure ($PRCA_{ist}$), which is determined from the inverse function.

**6.** Method according to any of claims 1 to 3, **characterised in that** the current load torque is determined at least in dependence on a compressor input-side suction pressure and on compressor speed.

**7.** Method according to claim 6, **characterised in that** the select signal is generated from the compressor input-side suction pressure, which is determined from the inverse function.

**8.** Method according to any of the preceding claims, **characterised in that** the compressor is operated in dependence on further parameters, such as an evaporator temperature.

**Revendications**

**1.** Procédé permettant de régler un compresseur (14) d'un circuit d'agent de refroidissement (10) d'un système de climatisation d'un véhicule automobile, dans lequel le couple de charge (M), au moment considéré, est déterminé et est comparé à un couple limite maximum prédéterminé ($M_{limite}$), et le compresseur est piloté en fonction d'une valeur comparative - en résultant - (14), **caractérisé en ce que** le couple de charge (M), au moment considéré, est représenté comme une fonction (f) de variables ($PRCA$, $r_c$, $PWM$, $U_G$) et, à l'aide d'une fonction d'inversion ($f_{inv}$) faisant partie de cette fonction (f), un signal pilote ($PRCA_{théorique}$) pour le compresseur (14) est déterminé en fonction du couple limite maximum ($M_{limite}$) prédéterminé par le pilotage du moteur.

**2.** Procédé selon la revendication 1, **caractérisé en ce que** le couple de charge (M), au moment considéré, est calculé d'après la fonction (f).

**3.** Procédé selon l'une des revendications précédentes, **caractérisé en ce que** la fonction (f) est stockée en mémoire comme cartographie (38).

**4.** Procédé selon l'une quelconque des revendications précédentes, **caractérisé en ce que** le couple de charge (M), au moment considéré, est déterminé au moins en fonction d'une haute pression ($PRCA_{réelle}$), côté sortie du compresseur, et de la vitesse de rotation ($r_c$) du compresseur.

**5.** Procédé selon l'une quelconque des revendications précédentes, **caractérisé en ce que** le signal pilote (48) est produit par la haute pression ($PRCA_{théorique}$), côté sortie du compresseur, qui est déterminée d'après la fonction d'inversion.

**6.** Procédé selon l'une quelconque des revendications 1 à 3, **caractérisé en ce que** le couple de charge, au moment considéré, est déterminé au moins en fonction d'une pression d'aspiration, côté entrée du compresseur, et de la vitesse de rotation du compresseur.

**7.** Procédé selon la revendication 6, **caractérisé en ce que** le signal pilote est produit par la pression d'aspiration, côté entrée du compresseur, qui est déterminée d'après la fonction d'inversion.

**8.** Procédé selon l'une quelconque des revendications précédentes, **caractérisé en ce qu'**un fonctionnement du compresseur se produit en fonction d'autre paramètres, comme par exemple une température de l'évaporateur.

Fig. 1

Fig. 2